# EUROPEAN PATENT APPLICATION

(11) **EP 3 650 266 A1**
(43) Date of publication of application: **13.05.2020**
(21) Application number: 18205512.9
(22) Date of filing: 09.11.2018
(51) Int. Cl.: B60L 58/26

(54) **THERMAL REGULATION SYSTEM FOR ELECTRIC DRIVE VEHICLES AND ELECTRIC DRIVE VEHICLE PROVIDED WITH THIS SYSTEM**

(71) Applicant: FCA Italy S.p.A., 10135 Torino (IT)
(72) Inventor: Attilio, CRIVELLARI, 10135 TORINO (IT); Fabrizio, BELTRAMELLI, 10135 TORINO (IT); Daniele, ACCORNERO, 10135 TORINO (IT); Luigi, SMERAGLIA, 10135 TORINO (IT); Marcello, MARAVOLO, 10135 TORINO (IT); Francesco, LOVUOLO, 10135 TORINO (IT)
(74) Representative: Lovino, Paolo

(57) **Abstract**

A thermal regulation system (14) for an electric drive vehicle (1) has two loops (15, 16) provided with respective pumps (17,18) to circulate a heat transfer fluid, and with respective heat exchangers (12, 20) to cool the heat transfer fluid; a battery pack (2) is arranged along the first loop (15), whereas an electric drive electric/electronic unit (3) is arranged along the second loop (16), to be cooled; the system (14) has a valve (26) switchable between a first configuration, in which the two loops (15, 16) channel independent flows, and a second configuration, in which the two loops communicate to form a single cooling circuit; the electric drive electric/electronic unit (3) and the battery pack (2) are arranged in parallel in the single cooling circuit of the second configuration in order to be cooled by different heat transfer fluid flow rates.

## Description

The present invention relates to a thermal regulation system for electric drive vehicles. Here and in the following, "electric drive vehicles" means both purely electric vehicles (in which the drive wheels are driven exclusively by one or more electric drive motors) and hybrid vehicles, provided with a thermal motor and with at least an electric drive motor.

As already known, electronic components, such as inverters, and electric energy storage batteries operate optimally if their temperature remains within a certain range of values. In particular, it is advisable that the temperature of the electronic components does not exceed 70°C and that the temperature of the batteries remains between 15 and 30°C. Therefore, electric drive vehicles normally have a controlled thermal regulation system to cool the electronic components and to condition (namely to cool and to heat) the high voltage battery that is installed to power the electric drive motor.

It is known to provide two separate cooling circuits for respectively adjusting the temperature of the electronic components and of the battery.

In order to optimize the driving range of the vehicle in the electric mode, it is advisable to couple the two cooling circuits under specific temperature conditions and to make these circuits independent under different operating and/or temperature conditions.

For this purpose, the document EP2392486 describes a system which, in a first configuration, has two distinct loops, the one for cooling the battery and the other for cooling the electronic components and the electric motor, whereas in a second configuration the two loops are connected together so as to form a single cooling circuit, along which the battery and the electronic components are arranged in series. The switching between the two configurations is carried out by commanding two control valves, of the three-way or of the four-way type.

This solution, although valid, has a drawback in the second configuration having a single cooling circuit. In fact, the same flow rate of circulating cooling fluid flows along the battery and the electronic components, so that this second configuration has little flexibility to manage the thermal regulation.

The object of the present invention is to provide a thermal regulation system for electric drive vehicles, which allows solving the aforementioned drawback and, more generally, allows improving the management of the thermal regulation based on different operating conditions that can occur in use.

The present invention relates to a thermal regulation system for electric drive vehicles as defined in claim 1. The present invention also relates to an electric drive vehicle as defined in claim 15.

For a better understanding of the present invention, a preferred embodiment is now described purely by way of nonlimiting example with reference to the attached drawings, in which:
- Figures 1 and 2 show a diagram with respective configurations relating to a first preferred embodiment of the thermal regulation system for electric drive vehicles according to the present invention;
- Figure 3 is similar to Figure 2 and shows a second preferred embodiment of the thermal regulation system according to the present invention; and
- Figure 4 is similar to Figures 2 and 3 and relates to a variant of the embodiments shown in these figures.

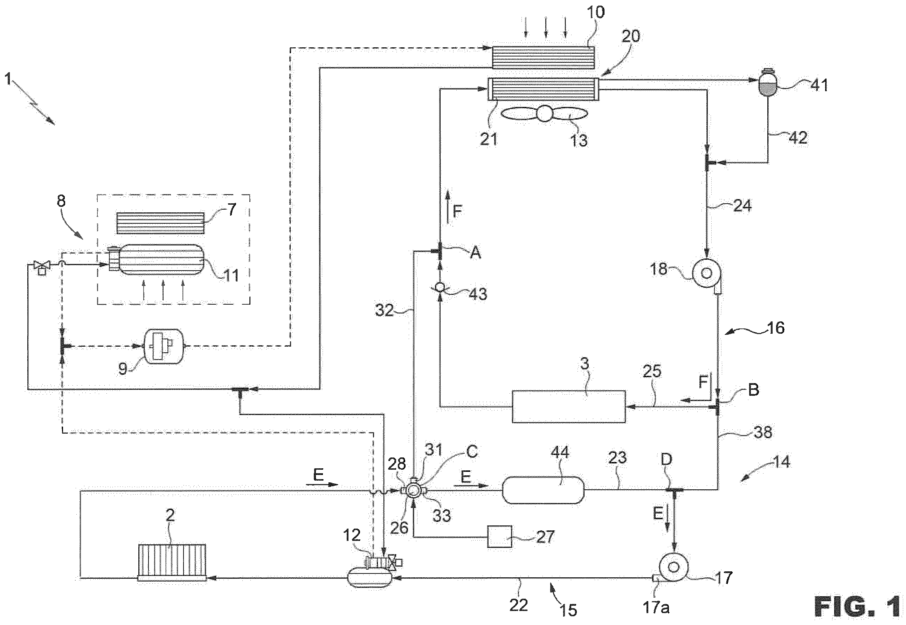

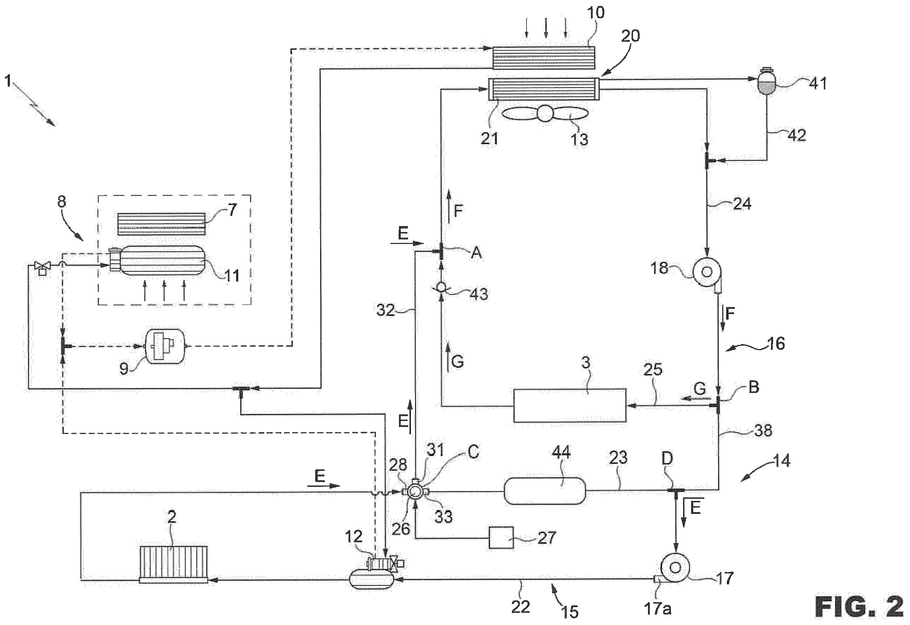

In Figures 1 and 2, the reference number 1 indicates as a whole an electric drive vehicle (partially and schematically shown). The vehicle 1 may be a purely electric drive vehicle or a hybrid drive vehicle, provided with at least one electric motor and one thermal motor.

The vehicle 1 comprises a battery pack 2, in particular of the so-called "high voltage" type (e.g. 400 V), which stores and supplies electrical energy in the form of direct current, and a drive electric/electronic unit, which is indicated as a whole by the reference number 3 and in particular includes one or more of the following components:
- at least one electric motor with alternating current, directly or indirectly coupled to one or more wheels of the vehicle 1 for driving these wheels. Preferably, the electric motor is defined by a rotating electric machine, also operating as an alternator, to convert mechanical energy into electrical power during at least some of the braking operations performed by the driver while the vehicle 1 is traveling;
- an inverter, also called PIM or "power inverter module", to convert the direct current of the battery pack 2 into alternating current for the electric motor;
- a transformer to convert the high voltage electric current of the battery pack 2 into a low voltage current (i.e. at a voltage of 12, 24 or 48 V) and then power other utilities provided on board the vehicle 1;
- a recharging device, commonly known as "On Board Charging Module", for recharging the battery pack 2 during the electric braking operations of the vehicle 1.

From the manufacturing point of view, the components of the electric drive unit 3 can be mutually integrated or arranged in separate positions without thereby affecting the scope of the present invention.

The vehicle 1 comprises an electric heater 7 and an air conditioning system 8 for heating and cooling the air in a passenger compartment (not shown). In particular, the system 8 comprises a compressor 9, a condenser 10 and a main evaporator 11, used to cool the air in the passenger compartment. According to variants not shown, for high-range vehicles and/or for relatively large passenger compartments, the system 8 may comprise an additional evaporator for greater comfort of the rear passengers.

The system 8 also comprises an exchanger called "chiller" and indicated by the reference number 12 for the heat exchange between the coolant of the system 8 and a heat transfer fluid, e.g. water.

The exchanger 12 is arranged in parallel with the evaporator 11 and has a function that will be explained in more detail in the following. In the embodiment shown in Figures 1 and 2, the condenser 10 is of the air-cooled type, i.e. is arranged in a front area of the vehicle and is cooled by a flow of ambient air, external to the vehicle 1, possibly by forced ventilation, i.e. by operating a fan 13.

The vehicle 1 further comprises a thermal regulation system 14 to regulate the temperature of the electric drive unit 3 and of the battery pack 2 by means of a heat transfer fluid. The system 14 comprises two loops 15 and 16 and two pumps 17, 18 respectively arranged along the loops 15 and 16 to circulate the heat transfer fluid. The system 14 further comprises the exchanger 12 and a heat exchanger 20. The exchangers 12 and 20 are respectively arranged along the loops 15 and 16 to cool the heat transfer fluid. Preferably, the exchanger 12 and the evaporator 11 are associated with valves equipped with respectively shut off systems or electronic regulation systems to adjust the flow of coolant in the two different branches of the system 8 that are respectively dedicated to the air conditioning of the passenger compartment and to the cooling in the loop 15.

As regards the heat exchanger 20, the latter comprises a radiator 21, preferably arranged in the front area of the vehicle 1 and cooled by a flow of ambient air, external to the vehicle 1, even by forced ventilation. For example, the radiator 21 is aligned with the condenser 10 to be also crossed by the airflow of the fan 13.

The loop 16 has two connection or branch points respectively indicated by A and B, which are connected to respective connection or branch points C and D of the loop 15.

The connection points C and D split the loop 15 into two consecutive branches 22 and 23: the pump 17, the exchanger 12 and the battery pack 2 are arranged along the branch 22. The pump 17 is arranged so that the heat transfer fluid flows into the branch 22 from the connection point D to the connection point C. Preferably, the exchanger 12 and the battery pack 2 are arranged between a delivery port 17a of the pump 17 and the connection point C.

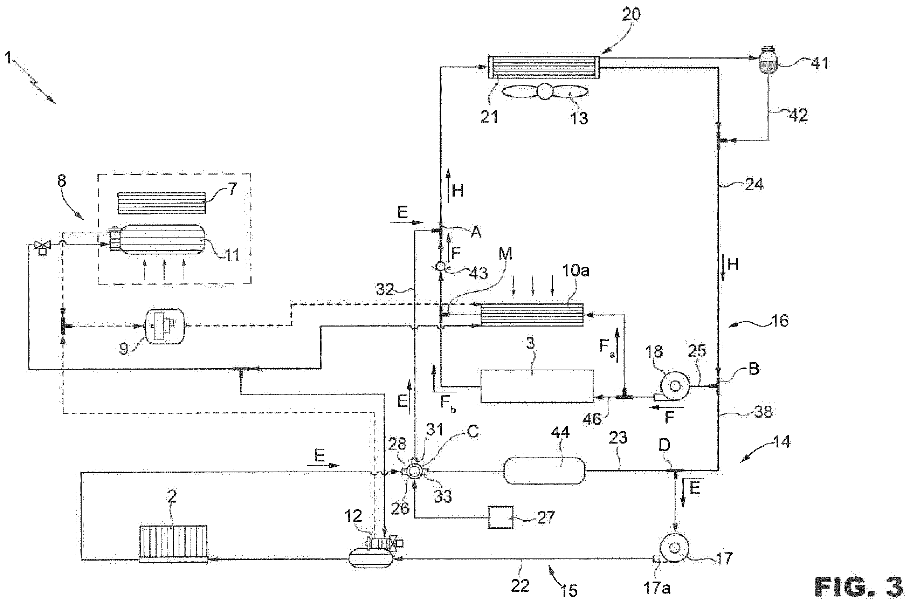

Analogously, the connection points A and B split the loop 16 into two consecutive branches 24 and 25: the heat exchanger 20 is arranged along the branch 24, whereas the electric drive unit 3 is arranged along the branch 25. The pump 18 may be arranged along the branch 24 as in the embodiment of Figures 1 and 2, or may be arranged along the branch 25 as in the embodiment of Figure 3. In particular, the pump 18 is arranged so that the heat transfer fluid flows into the branch 24 from the connection point A to the connection point B, and into the branch 25 from the connection point B to the connection point A.

The connection point A is defined by a T-fitting, while the connection point C is defined by a three-way and two-position valve 26, switchable by means of an electronic control unit 27 of the vehicle 1. More in detail, the valve 26 has:
- an inlet 28 connected to the branch 22 to receive a flow rate E of heat transfer fluid supplied by the delivery port 17a of the pump 17;
- an outlet 31 that communicates with the connection point A through a duct 32; and
- an outlet 33 that is connected to the branch 23 and communicates with a suction port 17b of the pump 17 through the connection point D.

According to a preferred aspect of the present invention, the connection point D communicates with the connection point B in a permanent way, namely in any configuration or operating condition. In particular, the connection points B and D are defined by respective T-fittings connected to each other by means of a duct 38.

The branch 24 is connected to an expansion or compensating tank 41 by a duct 42. The tank 41 is preferably arranged between the heat exchanger 20 and the connection point B. Thanks to the fact that the points B and D communicate in a permanent way, this single tank 41 performs its compensation function not only for the loop 16 but also for the loop 15 without needing any additional dedicated tank. Preferably, a one-way valve 43 is provided along the branch 25 to prevent any fluid flow from the connection point A to the connection point B (i.e. to prevent a reverse flow condition). As it will also be explained in the following, the valve 43 is not strictly necessary. In the embodiment of Figure 3, the valve 43 is arranged between the connection point A and the delivery port of the pump 18. According to an aspect of the present invention, the electric drive unit 3 is arranged along the branch 25 of the loop 16 and, under normal operating conditions, is cooled by at least a part of the heat transfer fluid pressurized by the pump 18.

The system 14 can operate in two different configurations in response to the switching of the valve 26. In a first configuration (Figure 1), the inlet 28 is in communication with the outlet 33, whereby the flow rate E of heat transfer fluid pumped by the pump 17 circulates to the suction port 17b. At the same time, the pump 18 delivers a flow rate F of heat transfer fluid, which flows from the connection point B into the branch 25 without entering the loop 15 for the flow rate conservation principle, so that there is no fluid mixing between the loops 15 and 16. In other words, the two loops 15 and 16 operate independently of each other, with respective flow rates E and F set by the respective pumps 17 and 18. The pump 17 and the exchanger 12 are activated/used when the battery pack 2 has a temperature higher than a predetermined first threshold (e.g. 30°C), whereby the flow rate E of the heat transfer fluid is cooled by the exchanger 12 and removes heat from the battery pack 2. At the same time, the pump 18 and the heat exchanger 20 are activated when the electric drive unit 3 has a temperature higher than a second predetermined threshold (e.g. 70°C), whereby the flow rate F of the heat transfer fluid is cooled by the heat exchanger 20 and removes heat from the electric drive unit 3. At the same time, there is substantially no fluid flow in the ducts 32 and 38, so that there is substantially no heat transfer between the flows respectively circulating in the loops 15 and 16.

If the temperature of the electric drive unit 3 is below a further predetermined threshold (possibly equal to the aforementioned second threshold), the loop 16 can be deactivated, e.g. by stopping the pump 18, to avoid any energy waste, while the loop 15 remains active. Advantageously, the system 14 further comprises a heater 44 arranged along the loop 15 and controlled by the electronic unit 27 to heat the flow rate E of heat transfer fluid when the temperature of the battery pack 2 is below a third predetermined threshold (e.g. 0°C). Advantageously, the heater 44 is arranged along the branch 23 to heat the battery pack 2 only when the system 14 operates in the just described first configuration.

In the second configuration (Figure 2), the inlet 28 communicates with the outlet 31, whereby the flow E of heat transfer fluid pumped by the pump 17 flows into the duct 32 to the connection point A and returns to the suction port 17b of the pump 17 through the duct 38, whereby the two loops 15 and 16 are no longer independent, but are integrated to form a single cooling circuit. In particular, the heat transfer fluid sucked by the pump 17 does not flow into the branch 23, so that in this second configuration the heater 44 does not cause any pressure drop.

In the embodiment of Figures 1 and 2, at the connection point A, the flow rate E delivered by the pump 17 flows into the branch 24 together with a flow rate G of heat transfer fluid coming from the branch 25 of the loop 16.

It is therefore evident that in the system 14 the electric drive unit 3 is arranged in parallel with the battery pack 2 and is cooled by a flow rate having a value (G) different from the one that cools the battery pack 2 and that can be regulated by varying the flow rates E and F by acting on the rotation speeds of the pumps 17 and 18, for example through commands based on control logics implemented in the electronic unit 27.

In the embodiment of Figure 3, as mentioned above, the pump 18 is arranged along the branch 25, preferably between the electric drive assembly 3 and the connection point B. In this case, in the second configuration at the connection point A the flow rates E and F of the heat transfer fluid supplied by the pumps 17 and 18 converge into the branch 24 to form a total flow rate H, which passes through the heat exchanger 20 and then splits again into the flow rates E and F at the connection point B. In this case too, the electric drive unit 3 is cooled by a flow rate that has a value (F) different from the one which cools the battery pack 2 and which can be regulated by varying the rotation speed of the pump 18.

Still considering the preferred embodiment of Figure 3, at a point L downstream of the delivery port of the pump 18, the branch 25 splits or branches into two portions 45 and 46, which are arranged in parallel with each other and are reunited at a point M, which is upstream of the valve 43 and of the connection point A (considering the flow direction from B to A). At the same time, the condenser 10 is replaced by a so-called water condenser 10a, which is arranged along the portion 45 to be cooled by a part Fa of the flow rate F of the heat transfer fluid circulating in the branch 25, while the electric drive unit 3 is arranged along the portion 46 to be cooled by a remaining part Fb of the flow rate F. In particular, the flow rate F pumped by the pump 18 is split into the parts Fa and Fb based on the pressure drops in the two portions 45 and 46.

According to a variant not shown, a regulation valve is provided at the point L to obtain suitable values for the flow rates Fa and Fb.

According to a further variant not shown (applicable both in Figure 2 and in Figure 3), the valve 43 is absent. In this case, if the pump 18 is turned off or does not work due to a failure, at the connection point A the flow rate E pumped by the pump 17 is split into two parts, one of which enters the branch 25 (in counter-flow with respect to the normal operating conditions) and cools the electric drive unit 3. This operation mode on the one hand allows cooling the electric drive unit 3 during the battery charging phase without switching on the pump 18 (to recirculate the heat transfer fluid to the connection point D) and on the other hand increases the redundancy level as it performs a safety function in case of failure or operation interruption of the pump 18.

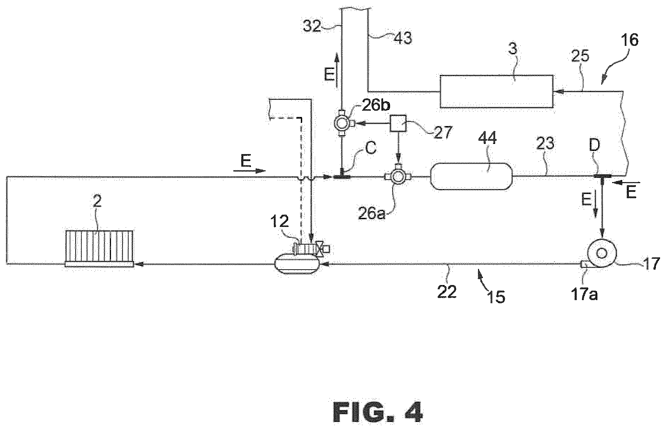

According to the variant partially shown in Figure 4 (applicable both in Figure 2 and in Figure 3), the valve 26 is replaced by two valves 26a and 26b, of the two-way type (on-off or proportional type), operated to open/close the ducts where they are installed, whereas the connection point C is defined by a T-fitting.

The valve 26a is arranged along the branch 23, in particular between the connection point C and the heater 44, whereas the valve 26b is arranged along the duct 32. To obtain the first configuration, where independent flows pass through the loops 15 and 16, the valve 26a is open, while the valve 26b is closed. To obtain the second configuration, where the loops 15 and 16 are coupled to form a single cooling circuit, the valve 26a is closed, while the valve 26b is open. The electronic unit 27 synchronously sends the opening/closing commands for the two valves 26a and 26b.

From what has been described above it is clear that, when the valve 26 connects the points A and B to form a single cooling circuit, the system 14 works in an extremely flexible way, since it is possible to vary the cooling capacity of the electric drive unit 3 with respect to the flow rate E which cools the battery pack 2. In particular, since the battery pack 2 and the electric drive unit 3 are arranged in parallel and not in series, also in this second configuration they can be crossed by different fluid flows that can be regulated by acting on the rotation speeds of the pumps 17, 18.

Moreover, as described above, this configuration with a single cooling circuit allows operating in different modes, for example based on external environmental conditions and/or to optimize energy consumption.

Generally, in the second configuration having the two loops 15, 16 coupled together to form a single cooling circuit, with the same components, the flow of heat transfer fluid to the exchanger 21 (radiator) is larger.

Finally, it is clear that modifications and variations can be made to the system 14 and to the vehicle 1 described herein with reference to the attached figures without departing from the scope of the present invention, as defined in the attached claims.

In general, to switch the system 14 between the first and the second configuration and/or to manage the operation in the second configuration, the number and/or position and/or type of valves used may be different from the preferred examples described above. With appropriate expedients, the flow direction set by the pump 18 could possibly be opposite to the one shown.

Furthermore, the system 14 could have one or more branched off lines, connected to the loop 15 or 16, to draw heat transfer fluid and cool other components of the vehicle 1 (in addition to the battery pack 2, the electric drive unit 3 and the possible condenser 10a). Moreover, a different component to be cooled could be provided instead of the condenser 10a in Figure 3.

Furthermore, the heater 44 could be arranged along the branch 22 or could be absent, e.g. could be replaced by another heating device integrated in the battery pack 2 and independent of the fluid of the loop 15.

## Claims

1. Thermal regulation system (14) for an electric drive vehicle (1); the system including:
- a first and a second loop (15, 16) to circulate a heat transfer fluid; said first loop (15) having a first and a second connection point (C, D) that split the first loop (15) into a first and a second branch (22, 23); said second loop (16) having a third and a fourth connection point (A, B) that split the second loop (16) into a third and a fourth branch (24,25); said first and second connection points (C, D) being suitable to be respectively connected to said third and fourth connection points (A, B);
- a first pump (17) arranged along said first branch (22) so that the heat transfer fluid flows from the second connection point (D) towards the first connection point (C) ;
- a second pump (18) arranged along said second loop (16);
- a first and a second heat exchanger (12, 20) to cool the heat transfer fluid, respectively arranged along said first and second loops (15, 16);
- a battery pack (2) and an electric drive electric/electronic unit (3) respectively arranged along said first and second loops (22) to be cooled by the heat transfer fluid;
- at least one control valve (26; 26a, 26b) switchable between a first configuration, wherein said first and second loops (15, 16) channel respective independent fluid flows, and a second configuration, wherein the first connection point (C) communicates with the third connection point (A) and the second connection point (D) communicates with the fourth connection point (B) so as to form a single cooling circuit;
**characterized in that**, in said single cooling circuit of the second configuration, the electric drive electric/electronic unit (3) and the battery pack (2) are arranged in parallel so as to be cooled by different flow rates of the heat transfer fluid.

2. The system according to claim 1, **characterized in that** said battery pack (2) and said electric drive electric/electronic unit (3) are respectively arranged along said first branch (22) and along said fourth branch (25) .

3. The system according to claim 2, **characterized in that** said first and second heat exchanger (12, 20) are respectively arranged along said first branch (22) and along said third branch (24).

4. The system according to claim 3, **characterized by** further comprising a heater (44) arranged along said second branch (23).

5. The system according to any one of the preceding claims, **characterized in that** said control valve (26) is arranged at said first connection point (C).

6. The system according to any one of the previous claims, **characterized in that** said second connection point (D) communicates with said fourth connection point (B) also in the first configuration.

7. The system according to claim 6, **characterized by** comprising a tank (41) connected to said third branch (24).

8. The system according to any one of the previous claims, **characterized in that** said second pump (18) is arranged so that the heat transfer fluid flows from the third connection point (A) to the fourth connection point (B) in the third branch (24), and from the fourth connection point (B) to the third connection point (A) in the fourth branch (25).

9. The system according to claim 8, **characterized by** further comprising a non-return valve (43) arranged along said fourth branch (25) so as to prevent any flow from said third connection point (A) towards said fourth connection point (B).

10. The system according to claim 8 or 9, **characterized in that** said second pump (18) is arranged along said third branch (24).

11. The system according to claim 8 or 9, **characterized in that** said second pump (18) is arranged along said fourth branch (25).

12. The system according to claim 11, **characterized in that** said second pump (18) is arranged between said electric drive electric/electronic unit (3) and said fourth connection point (B).

13. The system according to any one of the previous claims, **characterized in that** said fourth branch (25) comprises a first and a second duct portion (45, 46) arranged in parallel; said electric drive electric/electronic unit (3) being arranged along one of said first and second duct portions (45, 46); an additional component to be cooled (10a) being arranged along the other of said first and second portions (45, 46).

14. The system according to claim 13, **characterized in that** said additional component to be cooled (10a) is a water condenser, which is part of a passenger compartment air-conditioning system.

15. Electric drive vehicle comprising a thermal regulation system according to any one of the preceding claims.
